# FASCICULE DE BREVET EUROPEEN

(11) **EP 0 773 388 B1**
(45) Date de publication et mention de la délivrance du brevet: **27.12.2000**
(21) Numéro de dépôt: 96402382.4
(22) Date de dépôt: 08.11.1996
(51) Int. Cl.: F16H 3/66

(54) **Mécanisme de changement de vitesses automatique à rapports étagés**
Schaltvorrichtung eines automatischen Stufengetriebes
Shifting device for multistage gearboxes

(30) Priorité: 10.11.1995 FR 9513320
(43) Date de publication de la demande: 14.05.1997
(73) Titulaire: RENAULT, 92109 Boulogne-Billancourt (FR); AUTOMOBILES PEUGEOT, 75116 Paris (FR); AUTOMOBILES CITROEN, 92200 Neuilly-sur-Seine (FR)
(72) Inventeur: Buannec, Michel, 92000 Nanterre (FR); Pescarou, Philippe, 75015 Paris (FR); Jacquelin, Hugues, 94360 Bry-sur-Marne (FR); Poupon, Joel, 75015 Paris (FR)

(56) Documents cités:
- EP-A- 0 571 275
- US-A- 2 546 378
- US-A- 4 994 006
- PATENT ABSTRACTS OF JAPAN vol. 9, no. 282 (M-428) [2005] , 9 Novembre 1985 & JP-A-60 125444 (TOYOTA), 4 Juillet 1985

## Description

La présente invention se rapporte au domaine technique des transmissions automatiques. Plus précisément, elle concerne un mécanisme de changement de vitesses automatique à rapports étagés constitué d'un train épicycloïdal du type à quatre arbres associés à deux embrayages et trois freins dont un frein à disque, un premier frein à bande entourant complètement le train épicycloïdal et un second frein à bande, permettant d'obtenir quatre rapports de marche avant et un rapport de marche arrière.

Le document EP-A-0 571 275 divulgue un tel mécanisme conformément aux caractéristiques du préambule de la revendication 1.

Son but est de réaliser un mécanisme de changement de vitesses du type précité, particulièrement compact, et d'un rendement élevé.

Elle concerne un mécanisme de changement de vitesses automatique à rapports étagés, muni d'un train épicycloïdal du type à quatre arbres associés à deux embrayages et trois freins de façon à obtenir quatre rapports de marche avant et un rapport de marche arrière, où lesdits freins sont respectivement un frein à disque et deux freins à bande,
et où un premier frein à bande entoure complètement le train épicycloïdal, caractérisé en ce que le second frein à bande entoure le palier principal de support du mécanisme.

D'autres caractéristiques et avantages de l'invention apparaîtront clairement à la lecture de la description suivante d'un mode de réalisation particulier de celle-ci, en se reportant aux dessins annexés, sur lesquels :
- la figure 1 est un diagramme de RAVIGNEAUX illustrant, sans aucun caractère limitatif quant à l'étagement des rapports suggéré, le fonctionnement du mécanisme proposé,
- la figure 2 reproduit le tableau de commutation correspondant à ce diagramme, et
- la figure 3 est une coupe longitudinale simplifiée du mécanisme en question.

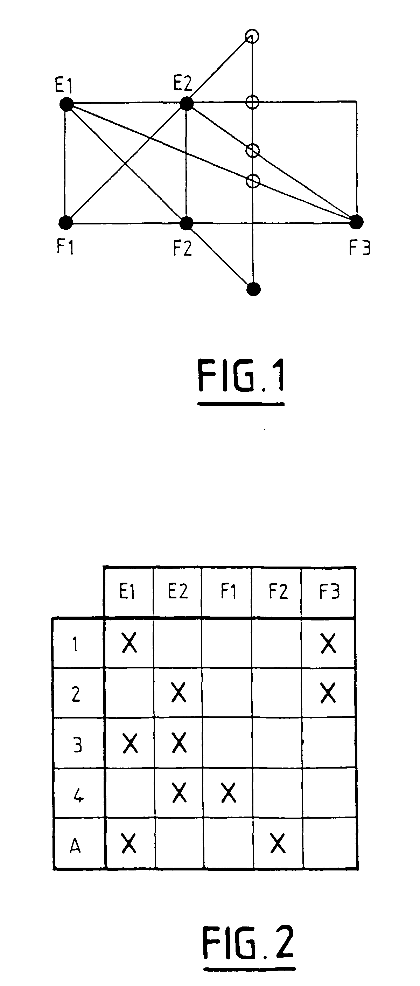

Les figures 1 et 2 font apparaître de manière conventionnelle que les quatre rapports de marche avant et le rapport de marche arrière du mécanisme de changement de vitesses faisant l'objet de l'invention sont respectivement obtenus en serrant :
- le premier embrayage E₁ et le troisième frein F₃,
- le second embrayage E₂ et le troisième frein F₃,
- le premier et le second embrayage, E₁ et E₂,
- le second embrayage E₂ et le premier frein F₁,
- le premier embrayage E₁ et le second frein F₂.

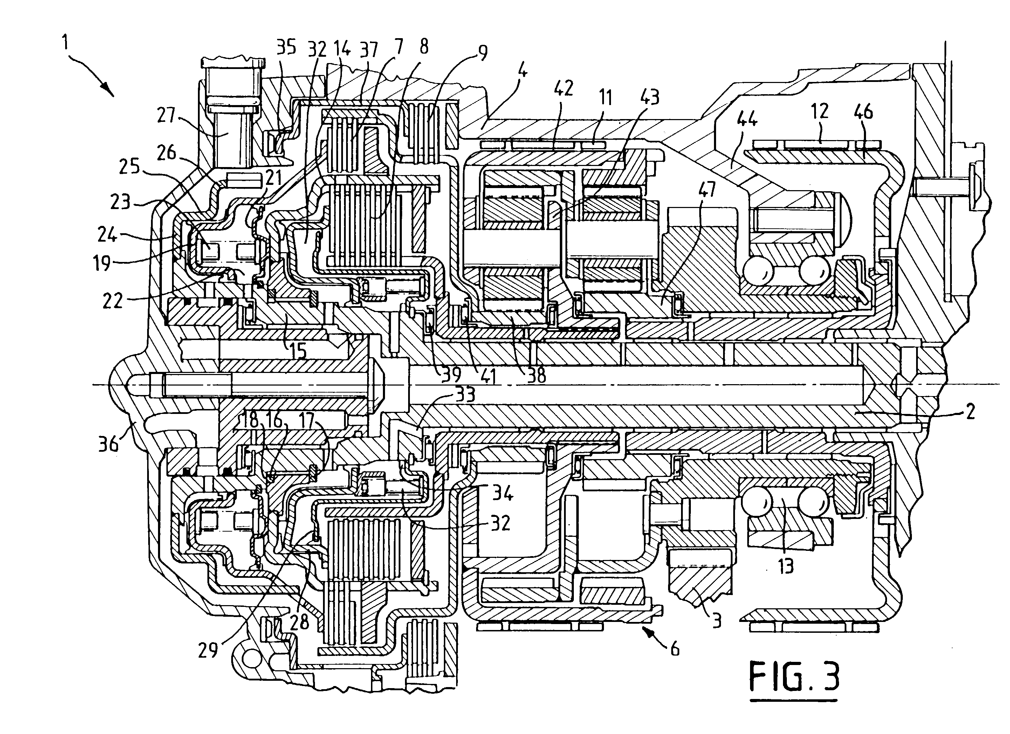

En se reportant à la figure 3, on voit que le mécanisme de changement de vitesses 1 en question, dont l'arbre d'entrée ou arbre de turbine 2 reçoit le couple d'un convertisseur hydrocinétique de couple non représenté, et dont la couronne de sortie 3 descend sur un mécanisme différentiel également non représenté, regroupe à l'intérieur d'un carter 4, un train épicycloïdal 6 et les organes de commutations suivants :
- un premier embrayage 7 (E₁), un second embrayage 8 (E₂), et, un premier frein 9 (F₁) situés immédiatement à côté du train épicycloïdal 6, du côté opposé au convertisseur,
- un second frein 11 (F₂) entourant complètement le train épicycloïdal 6, et
- un troisième frein 12 (F₃) entourant le palier principal de support 13 du mécanisme 1.

Sur la figure 3, on voit que le premier embrayage 7 (E₁) entoure le second embrayage 8 (E₂), la moitié des disques de chacun d'eux étant entraînés en rotation par une cloche 14 située dans l'espace annulaire entre lesdits embrayages 7,8. La cloche 14 est liée en rotation à une excroissance 15 en forme de tulipe, de l'arbre de turbine 2. Elle est immobilisée axialement sur l'arbre 2 entre un épaulement 16 de l'excroissance 15 et un circlips 17, une première étanchéité 18 étant prévue entre l'épaulement 16 et la cloche 14.

Le premier embrayage 7 (E₁) comporte un premier piston 19 et un premier contre-piston 21 montés à l'extérieur de la cloche 14, et délimitant une première chambre d'équilibrage centrifuge 22.

La chambre 22 comporte une série de ressorts 23 dont le tarage est tel qu'il équilibre la poussée du premier piston 19 sous une pression sensiblement égale à 1 bar. De plus, l'excroissance en forme de tulipe 15 de l'arbre turbine 2 comporte une extension axiale 24 ayant une première partie cylindrique 25 formant surface de fermeture pour le premier piston 19 et une deuxième partie cylindrique 26 crantée, formant cible pour le capteur de vitesse 27, donnant la vitesse turbine.

Le second embrayage 8 (E₂) comporte un second piston 28 et un second contre-piston 29, délimitant une seconde chambre d'équilibrage 31 comportant une seconde série de ressorts 32 dont le tarage est tel qu'ils équilibrent la poussée du second piston 28, sous une pression sensiblement égale à 1 bar.

Conformément à l'invention, la mise à la pression atmosphérique de la seconde chambre d'équilibrage 31 est effectuée par un siphon 33 usiné dans l'arbre de turbine 2, ce siphon débouchant dans la partie de faible diamètre dudit arbre. L'efficacité de ce siphon est garantie par la présence d'une seconde étanchéité 34 entre l'excroissance 15 de l'arbre de turbine et le second contre-piston 29, telle qu'une bague caoutchouteuse adhérant sur le second contre-piston 29, et serrée autour de l'excroissance 15.

Par ailleurs, le premier frein 7 (F₁) est concentrique au second embrayage 8 (E₂) et de diamètre sensiblement égal à celui du premier embrayage 7 (E₁), réalisant ainsi une disposition particulièrement compacte. Le premier frein 9 est serré par un troisième piston 35 logé dans le couvercle arrière 36, ce piston transmettant sa poussée par un tube 37 entourant le premier embrayage 7 (E₁).

On remarque également que la sortie du premier embrayage 7 (E₁), qui est reliée à un élément 38 du mécanisme épicycloïdal est dégauchie en rotation par une bague élastique 39 jointive à une butée à aiguilles 41 pour assurer une rotation régulière, lorsque ni le premier embrayage 7 (E₁), ni le premier frein 9 (F₁) ne sont serrés, ce qui est impératif pour l'engrènement correct de l'élément 38.

L'invention prévoit par ailleurs, que le second et le troisième frein 11, 12 (F₂, F₃) ne soient pas des freins à disque, comme le premier frein 9 (F₁) mais des freins à bande ayant l'avantage de présenter une traînée pratiquement nulle lorsqu'ils ne sont pas serrés.

Comme indiqué ci-dessus, le second frein 11 (F₂) entoure complètement le train épicycloïdal 6. Cette disposition lui permet d'immobiliser un premier tambour 42, solidaire d'un élément 43 du train épicycloïdal 6.

Le troisième frein 12 (F₃) entoure pour sa part le palier principal 13 mentionné plus haut, qui est monté sur une partie conique 44 du carter 4. Lorsqu'il est serré F₃ immobilise un second tambour 46, solidaire d'un élément 47 du train épicycloïdal 6.

L'ensemble des dispositions architecturales proposées par l'invention permet d'obtenir un mécanisme de changement de vitesses particulièrement compact. En particulier, l'utilisation de deux freins à bande parmi les trois freins du mécanisme et leur implantation autour d'éléments du train épicycloïdal permet de réduire considérablement l'encombrement du mécanisme proposé par rapport aux mécanismes connus, une telle implantation étant considérablement facilitée par la partie conique du carter autorisant la disposition d'un tambour à l'extérieur de celui-ci.

## Revendications

1. Mécanisme de changement de vitesses automatique à rapports étagés (1), muni d'un train épicycloïdal (6) du type à quatre arbres associés à deux embrayages (7, 8) et trois freins (9, 11, 12), dont un frein à disque (9), un premier frein à bande (11) entourant complètement le train épicycloïdal (6) et un second frein à bande (12) de façon à obtenir quatre rapports de marche avant et un rapport de marche arrière, caractérisé en ce que le second frein à bande (12) entoure le palier principal (13) de support du mécanisme (1).

2. Mécanisme de changement de vitesses selon la revendication 1, caractérisé en ce que le second frein à bande (12) immobilise, lorsqu'il est serré, un tambour (46), solidaire d'un élément (47) du train épicycloïdal (6).

3. Mécanisme de changement de vitesses selon la revendication 2, caractérisé en ce que les deux embrayages (7, 8) sont situés à proximité immédiate du train épicycloïdal (6) du côté opposé au convertisseur de couple transmettant le mouvement à celui-ci.

4. Mécanisme de changement de vitesses selon la revendication 3, caractérisé en ce que le second embrayage (8) entoure le premier embrayage (7), la moitié des disques de chaque embrayage étant entraîné par une cloche (14) située entre ces derniers et liée en rotation à l'arbre de turbine (2) du mécanisme.

5. Mécanisme de changement de vitesses selon la revendication 4, caractérisé en ce que le premier embrayage (7) comporte un premier piston (19) et un premier contre-piston (21) montés à l'extérieur de la cloche (14), de façon à délimiter une première chambre d'équilibrage centrifuge (22) renfermant une série de ressorts (23).

6. Mécanisme de changement de vitesses selon la revendication 4 ou 5, caractérisé en ce que la cloche (14) est liée à une excroissance (15) de l'arbre turbine comportant une première partie cylindrique (25) formant surface de fermeture pour le premier piston (19), et une deuxième partie cylindrique crantée (26) formant cible pour le capteur de vitesses de l'arbre turbine (2).

7. Mécanisme de changement de vitesses selon la revendication 4, ou 6, caractérisé en ce que le second embrayage (8) comporte un second piston (28) et un second contre-piston (29), montés à l'intérieur de la cloche (14) de façon à délimiter une seconde chambre d'équilibrage (31) centrifuge renfermant une série de ressorts (32).

8. Mécanisme de changement de vitesses selon la revendication 7, caractérisé en ce que la mise à la pression atmosphérique de la seconde chambre d'équilibrage (31) est effectuée par un siphon (33) usiné dans l'arbre de turbine (2).

9. Mécanisme de changement de vitesses selon l'une des revendications précédentes, caractérisé en ce que le frein à disques (9) est concentrique au second embrayage (8) et de diamètre sensiblement égal au premier embrayage (7).

10. Mécanisme de changement de vitesses selon la revendication 9, caractérisé en ce que le frein à disques (9) est serré par un piston (33) logé dans un couvercle (36) du carter de mécanisme (4).

11. Mécanisme de changement de vitesses selon l'une des revendications 2 à 10, caractérisé en ce que la sortie du premier embrayage (7), reliée à un troisième élément (38) du train épicycloïdal (6), est guidée en rotation par une bague élastique (39) jointive à une butée à aiguilles (41), en vue de conserver une rotation régulière lorsque ni le premier embrayage (7), ni le frein à disques (9) ne sont serrés.

12. Mécanisme de changement de vitesses selon l'une des revendications 2 à 11, caractérisé en ce que le second tambour (46) est disposé à l'extérieur d'une partie conique (44) du carter (4).

## Claims

1. An automatic gear change mechanism with staged ratios (1), provided with an epicycloidal gear train (6) of the type with four shafts associated with two clutches (7, 8) and three brakes (9, 11, 12), including a disk brake (9), a first band brake (11) completely surrounding the epicycloidal gear train (6) and a second band brake (12) in order to obtain four forward gear ratios and one reverse gear ratio, characterised in that the second band brake (12) surrounds the main support bearing (13) of the mechanism (1).

2. A gear change mechanism as claimed in claim 1, characterised in that the second band brake (12) locks, when it is engaged, a drum (46) rigid with a member (47) of the epicycloidal gear train (6).

3. A gear change mechanism as claimed in claim 2, characterised in that the two clutches (7, 8) are disposed in the immediate vicinity of the epicycloidal gear train (6) on the side opposite to the torque converter transmitting movement thereto.

4. A gear change mechanism as claimed in claim 3, characterised in that the second clutch (8) surrounds the first clutch (7), half of the disks of each clutch being driven by a bell (14) disposed between these latter and connected in rotation to the turbine shaft (2) of the mechanism.

5. A gear change mechanism as claimed in claim 4, characterised in that the first clutch (7) comprises a first piston (19) and a first counter-piston (21) mounted externally to the bell (14) so as to bound a first centrifugal balancing chamber (22) containing a series of springs (23).

6. A gear change mechanism as claimed in claim 4 or 5, characterised in that the bell (14) is connected to a projection (15) of the turbine shaft comprising a first cylindrical portion (25) forming a closure surface for the first piston (19) and a second indexed cylindrical portion (26) forming a target for the speed sensor of the turbine shaft (2).

7. A gear change mechanism as claimed in claim 4 or 6, characterised in that the second clutch (8) comprises a second piston (28) and a second counter-piston (29) mounted inside the bell (14) so as to bound a second centrifugal balancing chamber (31) containing a second series of springs (32).

8. A gear change mechanism as claimed in claim 7, characterised in that the second balancing chamber (31) is brought to atmospheric pressure by a siphon (33) machined in the turbine shaft (2).

9. A gear change mechanism as claimed in one of the preceding claims, characterised in that the disk brake (9) is concentric to the second clutch (8) and of a diameter substantially equal to the first clutch (7).

10. A gear change mechanism as claimed in claim 9, characterised in that the disk brake (9) is engaged by a piston (33) housed in a cover (36) of the mechanism housing (4).

11. A gear change mechanism as claimed in one of claims 2 to 10, characterised in that the output of the first clutch (7), connected to a third member (38) of the epicycloidal gear train (6), is guided in rotation by an elastic ring (39) abutting a needle bearing (41) in order to maintain regular rotation when neither the first clutch (7) nor the disk brake (9) are engaged.

12. A gear change mechanism as claimed in one of claims 2 to 11, characterised in that the second drum (46) is disposed externally to a conical portion (44) of the housing (4).

## Patentansprüche

1. Automatisches Stufengetriebe (1), das ein Planetengetriebe (6) aufweist mit vier Wellen, denen zwei Kupplungen (7, 8) und drei Bremsen (9, 11, 12) zugeordnet sind, darunter eine Lamellenbremse (9), eine erste Bandbremse (11), die das Planetengetriebe (6) vollständig umgibt und eine zweite Bandbremse (12), sodass vier Vorwärtsgänge und ein Rückwärtsgang erhalten werden, dadurch gekennzeichnet, dass die zweite Bandbremse (12) das Haupttraglager (13) des Getriebes (1) umgibt.

2. Getriebe nach Anspruch 1, dadurch gekennzeichnet, dass die zweite Bandbremse (12) im geschlossenen Zustand einen Rotor (46) festhält, der fest mit einem Bauteil (47) des Planetengetriebes (6) verbunden ist.

3. Getriebe nach Anspruch 2, dadurch gekennzeichnet, dass die beiden Kupplungen (7, 8) in unmittelbarer Nähe des Planetengetriebes (6) auf der dem Drehmomentwandler für die Übertragung der Bewegung auf dieses abgewandten Seite angeordnet sind.

4. Getriebe nach Anspruch 3, dadurch gekennzeichnet, dass die erste Kupplung (7) die zweite Kupplung (8) umgibt, wobei die Hälfte der Lamellen einer jeden Kupplung von einer Nabe (14) angetrieben werden, die zwischen diesen beiden Kupplungen drehfest mit der Turbinenwelle (2) des Getriebes verbunden ist.

5. Getriebe nach Anspruch 4, dadurch gekennzeichnet, dass die erste Kupplung (7) einen ersten Kolben (19) und einen ersten Gegenkolben (21) aufweist, die außerhalb der Nabe (14) derart angeordnet sind, dass sie eine erste Zentrifugalausgleichskammer (22) begrenzen, in der eine Reihe von Federn (23) eingeschlossen ist.

6. Getriebe nach Anspruch 4 oder 5, dadurch gekennzeichnet, dass die Nabe (14) mit einer Ausstülpung (15) der Turbinenwelle verbunden ist, die einen ersten zylindrischen Abschnitt (25) aufweist, die als Schliessfläche für den ersten Kolben (19) dient und einen zweiten gerippten zylindrischen Abschnitt (26) aufweist, der als Markierung für den Geschwindigkeitsfühler für die Turbinenwelle (2) dient.

7. Getriebe nach Anspruch 4 oder 6, dadurch gekennzeichnet, dass die zweite Kupplung (8) einen zweiten Kolben (28) und einen zweiten Gegenkolben (29) aufweist, die innerhalb der Nabe (14) derart angeordnet sind, dass sie eine zweite Zentrifugalausgleichskammer (31) begrenzen, in der eine zweite Reihe von Federn (32) eingeschlossen ist.

8. Getriebe nach Anspruch 7, dadurch gekennzeichnet, dass die Verbindung mit dem atmosphärischen Druck der zweiten Ausgleichskammer (31) durch einen Siphon (33) erfolgt, der in die Turbinenwelle (2) eingearbeitet ist.

9. Getriebe nach einem der vorhergehenden Ansprüche, dadurch gekennzeichnet, dass die Lamellenbremse (9) konzentrisch zur zweiten Kupplung (8) ist mit einem Durchmesser, der im wesentlichen gleich der ersten Kupplung (7) ist.

10. Getriebe nach Anspruch 9, dadurch gekennzeichnet, dass die Lamellenbremse (9) durch einen Kolben (33) geschlossen wird, der in einem Deckel (36) des Getriebegehäuses (4) angeordnet ist.

11. Getriebe nach einem der Ansprüche 2 bis 10, dadurch gekennzeichnet, dass der Ausgang der ersten Kupplung (7), der mit einem dritten Bauteil (38) des Planetengetriebes (6) verbunden ist, in Drehrichtung geführt wird durch einen elastischen Ring (39) zusammen mit einem Nadellageranschlag (41), um eine regelmäßige Rotation beizubehalten, wenn weder die erste Kupplung (7) noch die Lamellenbremse (9) geschlossen sind.

12. Getriebe nach einem der Ansprüche 2 bis 11, dadurch gekennzeichnet, dass der zweite Rotor (46) außerhalb eines konischen Abschnitts (44) des Gehäuses (4) angeordnet ist.
